# EUROPÄISCHE PATENTANMELDUNG

(11) **EP 1 130 941 A2**
(43) Veröffentlichungstag der Anmeldung: **05.09.2001**
(21) Anmeldenummer: 01200656.5
(22) Anmeldetag: 22.02.2001
(51) Int. Cl.: H04Q 7/38

(54) **Drahtloses Netzwerk mit einer Fehlerbehandlungsprozedur bei einem falschen Schlüssel**

(30) Priorität: 29.02.2000 DE 10009447
(71) Anmelder: Philips Corporate Intellectual Property GmbH, 52064 Aachen (DE); Koninklijke Philips Electronics N.V., 5621 BA Eindhoven (NL)
(72) Erfinder: Herrmann, Christoph, Dr., 52064 Aachen (DE); Wasel, Josef, Dr., 52064 Aachen (DE)
(74) Vertreter: Gössmann, Klemens

(57) **Zusammenfassung**

Die Erfindung bezieht sich auf ein drahtloses Netzwerk mit einer Funknetzwerk-Steuerung und mehreren zugeordneten Terminals, die zur Verschlüsselung bestimmter zu übertragener Daten in Abhängigkeit von einem in bestimmten Abständen veränderbaren Schlüssel vorgesehen sind. Ein Terminal sendet bei einem falschen verwendeten Schlüssel nach Leerung aller im Terminal enthaltenen Warteschlangen oder bei Unterschreiten eines vordefinierten Mindestfüllstandes eine vorgegebene Anzahl von Status-Nachrichten und gibt alle verwendeten Resourcen frei, wenn keine Rekonfigurations-Nachricht nach Aussenden der Status-Nachrichten von der Funknetzwerk-Steuerung empfangen worden ist.

## Beschreibung

Die Erfindung bezieht sich auf ein drahtloses Netzwerk mit einer Funknetzwerk-Steuerung und mehreren zugeordneten Terminals, die zur Verschlüsselung bestimmter zu übertragener Daten in Abhängigkeit von einem in bestimmten Abständen veränderbaren Schlüssel vorgesehen sind.

Aus dem Dokument "3rd Generation Partnership Project; Technical Specification Group Radio Access Network; Interlayer Procedures in Connected Mode (3G TS 25.303 version 3.2.0)" ist ein drahtloses Netzwerk bekannt, bei welchen in regelmäßigen Abständen der Schlüssel für die Verschlüsselung von Daten bzw. Nachrichten geändert wird. Tritt der Fall ein, dass im Terminal z.B. durch fehlerhafte Übertragung ein falscher Schlüssel verwendet wird, kann das Terminal dieses nicht selbst erkennen. Andererseits ist es von der zugeordneten Funknetzwerk-Steuerung infolge des falschen Schlüssels nicht mehr erreichbar, so dass es von der Funknetzwerksteuerung nicht angewiesen werden kann, die verwendeten Resourcen freizugeben (Fehlersituation).

Der Erfindung liegt die Aufgabe zugrunde, ein drahtloses Netzwerk zu schaffen, das die Fehlersituation bei einem falsch zu einem Terminal übertragenen Schlüssel verhindert.

Die Aufgabe wird durch ein drahtloses Netzwerk der eingangs genannten Art dadurch gelöst,
dass ein Terminal bei einem falschen verwendeten Schlüssel nach Leerung aller im Terminal enthaltenen Warteschlangen oder bei Unterschreiten eines vordefinierten Mindestfüllstandes zur Absendung von einer vorgegebenen Anzahl von Status-Nachrichten und
zur Freigabe aller verwendeten Resourcen vorgesehen ist, wenn keine Rekonfigurations-Nachricht nach Aussenden der Status-Nachrichten von der Funknetzwerk-Steuerung empfangen worden ist.

Unter dem erfindungsgemäßen drahtlosen Netzwerk ist ein Netzwerk mit mehreren Funkzellen zu verstehen, in denen jeweils eine Basisstation und mehrere Terminals Steuer- und Nutzdaten drahtlos übertragen. Eine drahtlose Übertragung dient zur Übertragung von Informationen z.B. über Funk-, Ultraschall- oder Infrarotwege.

Erfindungsgemäß wird nach einer bestimmten Anzahl von ausgesendeten Status-Nachrichten die verwendeten Resourcen im Terminal freigegeben (z.B. Verbindungsabbau im Terminal) und in einen Wartezustand gewechselt, in dem ein Terminal von der Funknetzwerk-Steuerung wieder erreichbar ist. Demgegenüber stellt die Funknetzwerk-steuerung bei keinem weiteren Empfang von Daten bzw. Nachrichten von einem Terminal nach einer bestimmten Zeit eine Inaktivität fest und sendet eine mit dem richtigen Schlüssel verschlüsselte Rekonfigurations-Nachricht an das Terminal aus. Da das Terminal den falschen Schlüssel verwendet, kann es die mit dem richtigen Schlüssel verschlüsselten Rekonfigurations-Nachricht nicht als solche erkennen. Daher wird der Wartezustandes im Terminal nach einer bestimmten Anzahl von abgesendeten Status-Nachrichten autonom eingenommen.

Die Erfindung bezieht sich auch auf ein Terminal in einem solchen drahtlosen Netzwerk.

Ausführungsbeispiele der Erfindung werden nachstehend anhand der Fig. näher erläutert. Es zeigen:
- Fig. 1: ein drahtloses Netzwerk mit einer Funknetzwerk-Steuerung und mehreren Terminals,
- Fig. 2: ein Schichtenmodell zur Erläuterung verschiedener Funktionen eines Terminals oder einer Funknetzwerk-Steuerung und
- Fig. 3: ein Blockschaltbild zur Erläuterung des Verschlüsselungsmechanismus in einem Terminal oder einer Funknetzwerk-Steuerung.

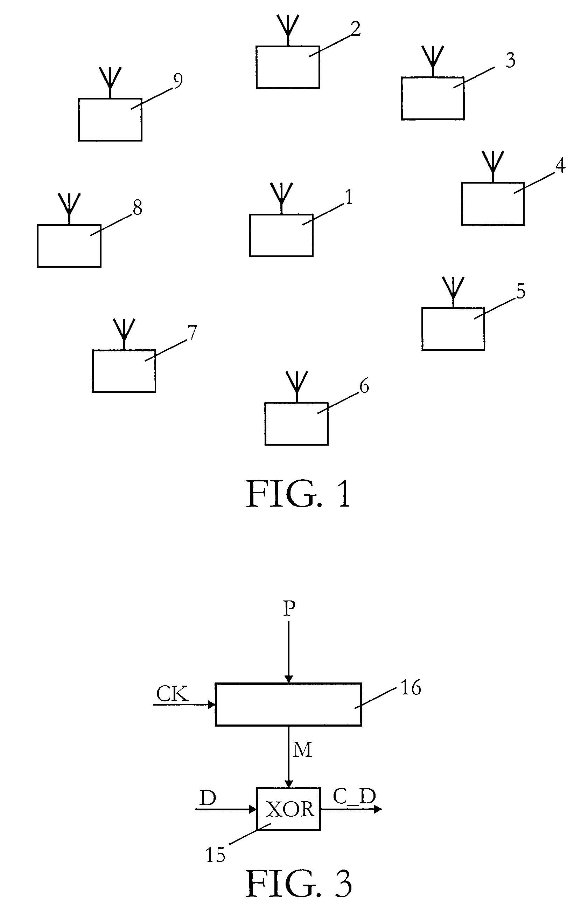

In Fig. 1 ist ein drahtloses Netzwerk, z.B. Funknetzwerk, mit einer Funknetzwerk-Sceuerung (Radio Network Controller = RNC) 1 und mehreren Terminals 2 bis 9 dargestellt. Die Funknetzwerk-Steuerung 1 ist für Steuerung aller am Funkverkehr beteiligten Komponenten verantwortlich, wie z.B. der Terminals 2 bis 9. Ein Steuer- und Nutzdatenaustausch findet zumindest zwischen der Funknetzwerk-Steuerung 1 und den Terminals 2 bis 9 statt. Die Funknetzwerk-Steuerung 1 baut jeweils eine Verbindung zur Übertragung von Nutzdaten auf.

In der Regel sind die Terminals 2 bis 9 Mobilstationen und die Funknetzwerk-Steuerung 1 ist fest installiert. Eine Funknetzwerk-Steuerung 1 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall T_{C} bezeichnet. 1/T_{C} ist die Chiprate. Die Multiplikation bzw. Modulation des Datensignals mit dem pseudo-zufälligen Rechtecksignal hat eine Spreizung des Spektrums um den Spreizungsfaktor N_{C} = T/T_{C} zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung 1 werden über von der Funknetzwerk-Steuerung 1 vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Funknetzwerk-Steuerung 1 zu den Terminals 2 bis 9 wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet.

Beispielsweise kann ein Downlink-Steuerkanal vorgesehen sein, der benutzt wird, um von der Funknetzwerk-Steuerung 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal 2 bis 9 zur Funknetzwerk-Steuerung 1 kann beispielsweise ein von der Funknetzwerk-Steuerung 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-Kanal (common uplink channel) bezeichnet. Nach einem Verbindungsaufbau z.B. zwischen einem Terminal 2 bis 9 und der Funknetzwerk-Steuerung 1 werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann. Zur Einbindung eines Terminals 2 bis 9 zu einer Funknetzwerk-steuerung 1 ist ein kollisionsbehafteter Kanal mit wahlfreiem Zugriff zuständig.

Damit Nutzdaten zwischen der Funknetzwerk-Steuerung 1 und einem Terminal ausgetauscht werden können, ist es erforderlich, dass ein Terminal 2 bis 9 mit der Funknetzwerk-Steuerung 1 synchronisiert wird. Beispielsweise ist aus dem GSM-System (GSM = Global System for Mobile communication) bekannt, in welchem eine Kombination aus FDMA- und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig.

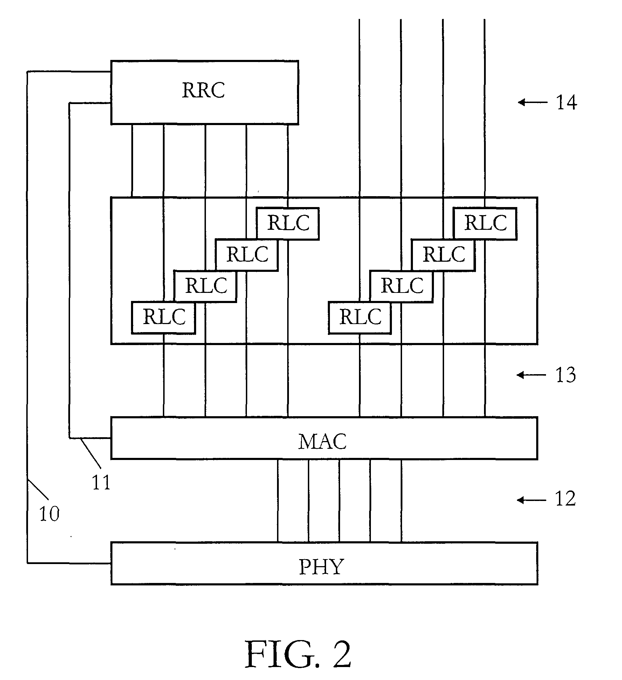

Die Steuer- und Nutzdatenaustausch über die Funkschnittstelle zwischen der Funknetzwerk-Steuerung 1 und den Terminals 2 bis 9 kann mit dem in Fig. 2 dargestellten, beispielhaften Schichtenmodell oder Protokollarchitektur (vgl. z.B. 3^{rd} Generation Parrnership Project (3GPP); Technical Specification Group (TSG) RAN; Working Group 2 (WG2); Radio Interface Protocol Architecture; TS 25.301 V3.2.0 (1999-10)) erläutert werden. Das Schichtenmodell besteht aus drei Protokollschichten: der physikalischen Schicht PHY, der Datenverbindungsschicht mit den Unterschichten MAC und RLC (in Fig. 2 sind mehrere Ausprägungen der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig. Die Schicht RRC ist für die Signalisierung zwischen den Terminals 2 bis 9 und der Funknetzwerk-Steuerung 1 verantwortlich. Die Unterschicht RLC dient zur Steuerung einer Funkverbindung zwischen einem Terminal 2 bis 9 und der Funknetzwerk-Steuerung 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportverbindungen 12 an. Die MAC-Schicht stellt der RLC-Schicht logische Verbindungen 13 zur Verfügung. Die RLC-Schicht ist über Zugangspunkte 14 von Applikationen erreichbar.

Bei einem solchen drahtlosen Netzwerk werden die Daten aus Sicherheits- und Vertraulichkeitsgründen verschlüsselt über die Funkschnittstelle übertragen, um eine Abhören der Daten zu verhindern. Die Verschlüsselung wird in der Datenverbindungsschicht (z. B. in der RLC- oder MAC-Schicht) durchgeführt. Wie Fig. 3 zeigt, werden die Daten D über eine Exklusiv-Oder-Funktion (XOR) mit einer Verschlüsselungsmaske M verknüpft, so dass sich ein verschlüsselter Datenstrom C_D ergibt. Die Verschlüsselungsmaske M wird in einer Verschlüsselungs-Funktion 16 gebildet, die nach einem Verschlüsselungs-Algorithmus arbeitet und als Eingangswerte den Schlüssel CK und andere hier nicht näher dargestellte Parameter P erhält.

Der Schlüssel muss sowohl der Funknetzwerk-Steuerung 1 als auch den Terminals 2 bis 9 bekannt sein. Dieser Schlüssel wird zu bestimmten Zeitpunkten (z.B. alle 2 Stunden) mit einer speziellen Prozedur CKC (cipher key change) geändert, die als Schlüsseländerungsprozedur bezeichnet wird. Bei dieser Prozedur werden lokale Meldungen zwischen den Schichten RLC und RRC übertragen

In regelmäßigen Abständen wird der Schlüssel, mit dem ein Terminal 2 bis 9 und die Funknetzwerk-Steuerung 1 jeweils die Verschlüsselungsmaske erzeugen geändert. Dazu versendet ein für Managementfunktionen vorgesehenes Netzwerk (Core Network) an die Funknetzwerk-Steuerung und ein Terminal eine Zufallszahl (random challenge), aus der sowohl ein Terminal als auch die Funknetzwerk-Steuerung mittels eines geheimen Schlüsselalgorithmus den neu zu verwendenden Schlüssel berechnen. Die Funknetzwerk-steuerung und ein Terminal berechnen außerdem unter Verwendung der Zufallszahl eine weitere Vergleichszahl, die das Terminal über die Funkschnittstelle an die Funknetzwerk-steuerung sendet. Stimmen die jeweils berechneten Vergleichszahlen überein, so gilt das Terminal als authentifiziert.

Tritt bei der Berechnung des Schlüssels im Terminal ein Fehler auf oder wird der Schlüssel falsch übertragen, so wird das Terminal falsche Verschlüsselungsmasken verwenden und damit von der Funknetzwerk-Steuerung nach Empfang einer verschlüsselten Nachricht nicht mehr verstanden. Im Terminal laufende Applikationen stellen nach Verwendung des falschen neuen Schlüssels fest, dass sie keine sinnvollen neuen Daten mehr von der Funknetzwerk-Steuerung empfangen bzw. senden können. Da dieser Zustand ständig fehlerhafter Übertragung zwangsläufig bestehen bleibt, stellen die Applikationen ihren Betrieb ein.

Das bedeutet, dass im Terminal alle Warteschlangen mit Nachrichten bzw. Daten geleert werden. Warteschlangen werden im Terminal zur Pufferung von Nachrichten bzw. Daten benötigt. Als Folge der entleerten Warteschlangen sendet das Terminal zu der Funknetzwerk-Steuerung verschlüsselte Status-Nachrichten (Measurement Reports) über einen dedizierten Steuerkanal (DCCH), um diesem den Füllstand der Warteschlangen mitzuteilen. Da in diesem Fall der falsche Schlüssel verwendet wird, kann die Funknetzwerk-Steuerung diese Status-Meldungen nicht verstehen und verwirft sie. Gleichzeitig beobachtet die Funknetzwerk-Steuerung auf dem dedizierten Nutzkanal (DCH), welcher dem Terminal zugeteilt ist, eine Inaktivität, da auf diesem Nutzkanal infolge des Abschaltens aller Applikationen keine Transportblöcke mehr eingehen. Die Funknetzwerk-Steuerung sendet nach Feststellung der Inaktivität nach einer bestimmten Zeit eine verschlüsselte Rekonfigurations-Nachricht (Radio Bearer Reconfigure) zum Terminal. Im Normalfall, wenn der Schlüssel vom Terminal nicht falsch empfangen worden ist, würde der Empfang dieser Rekonfigurations-Nachricht vom Terminal mit einer Bestätigungsmeldung bestätigt. Die Funknetzwerk-Steuerung betrachtet nach Feststellung der Inaktivität und einer Wartezeit für den Empfang der Bestätigungsmeldung den bisher benutzten Kanal oder die bisher benutzen Kanäle als frei. Im Terminal liegt jedoch eine Fehlersituation vor, da sie die verwendeten Resourcen auf Grund der nicht empfangenen Rekonfigurations-Nachricht nicht freigeben kann.

Da das Terminal und die Funknetzwerk-Steuerung sich nicht mehr über (verschlüsselte) Steuerungsnachrichten verständigen können, erfolgt erfindungsgemäß die Bereinigung der Fehlersituation auf implizitem Weg.

Im Terminal sind - wie oben erläutert - die Warteschlangen nach der Beendigung des Datenaustausches der Applikationen mit der Funknetzwerk-Steuerung leer. Auf Grund der leeren Warteschlangen sendet das Terminal verschlüsselte Status-Nachrichten über einen dedizierten Steuerkanal (DCCH) an die Funknetzwerk-Steuerung. Diese Status-Nachrichten zeigen an, dass die Warteschlangen leer bzw. einen vordefinierten Mindestfüllstand dauerhaft unterschreiten haben. Nach Absenden von N Status-Nachrichten, erwartet das Terminal eine verschlüsselte Rekonfigurations-Nachricht von der Funknetzwerk-Steuerung. Diese wird zwar empfangen, kann aber nach Entschlüsselung mit dem falschen Schlüssel nicht verstanden werden.

Erfindungsgemäß wird das Terminal nach Absenden von N Status-Nachrichten und keinem zwischenzeitlichem Empfang einer verschlüsselten Rekonfigurations-Nachricht von der Funknetzwerk-Steuerung die verwendeten Resourcen freigeben und in einen Wartezustand wechseln, in dem wieder der Aufbau einer Verbindung möglich ist. Durch diese Maßnahme wird sichergestellt, dass im seltenen Fall eines falschen Schlüssels im Terminal nach Abbruch aller Applikationen das Terminal in einen Wartezustand wechselt, in dem es dann über einen unverschlüsselten Steuerkanal wieder von der Funknetzwerk-steuerung erreichbar ist.

## Patentansprüche

1. Drahtloses Netzwerk mit einer Funknetzwerk-Steuerung und mehreren zugeordneten Terminals, die zur Verschlüsselung bestimmter zu übertragener Daten in Abhängigkeit von einem in bestimmten Abständen veränderbaren Schlüssel vorgesehen sind,
**dadurch gekennzeichnet**,
dass ein Terminal bei einem falschen verwendeten Schlüssel nach Leerung aller im Terminal enthaltenen Warteschlangen oder bei Unterschreiten eines vordefinierten Mindestfüllstandes zur Absendung von einer vorgegebenen Anzahl von Status-Nachrichten und
zur Freigabe aller verwendeten Resourcen vorgesehen ist, wenn keine Rekonfigurations-Nachricht nach Aussenden der Status-Nachrichten von der Funknetzwerk-Steuerung empfangen worden ist.

2. Drahtloses Netzwerk nach Anspruch 1,
**dadurch gekennzeichnet**,
dass eine Funknetzwerk-Steuerung bei keinem weiteren Empfang von Daten bzw. Nachrichten von einem Terminal nach einer bestimmten Zeit zur Feststellung einer Inaktivität und zur Aussendung einer mit dem richtigen Schlüssel verschlüsselten Rekonfigurations-Nachricht an das Terminal vorgesehen ist.

3. Drahtloses Netzwerk nach Anspruch 2,
**dadurch gekennzeichnet**,
dass ein Terminal auf Grund des falschen Schlüssels eine mit dem richtigen Schlüssel verschlüsselten Rekonfigurations-Nachricht nicht als solche erkennt.

4. Terminal in einem drahtlosen Netzwerk mit einer Funknetzwerk-Steuerung und weiteren Terminal zur Verschlüsselung bestimmter zu übertragener Daten in Abhängigkeit von einem in bestimmten Abständen veränderbaren Schlüssel,
**dadurch gekennzeichnet**,
dass das Terminal bei einem falschen verwendeten Schlüssel nach Leerung aller im Terminal enthaltenen Warteschlangen oder bei Unterschreiten eines vordefinierten Mindestfüllstandes zur Absendung von einer vorgegebenen Anzahl von Status-Nachrichten und
zur Freigabe aller verwendeten Resourcen vorgesehen ist, wenn keine Rekonfigurations-Nachricht nach Aussenden der Status-Nachrichten von der Funknetzwerk-Steuerung empfangen worden ist.
